# EUROPÄISCHE PATENTSCHRIFT

(11) **EP 1 177 123 B1**
(45) Veröffentlichungstag und Bekanntmachung des Hinweises auf die Patenterteilung: **02.05.2007**
(21) Anmeldenummer: 01915050.7
(22) Anmeldetag: 28.02.2001
(51) Int. Cl.: B62D 1/16

(54) **LENKSÄULE SOWIE HERSTELLUNGSVERFAHREN DAFÜR**
STEERING COLUMN AND METHOD FOR PRODUCTION THEREOF
COLONNE DE DIRECTION ET SON PROCEDE DE PRODUCTION

(30) Priorität: 29.02.2000 DE 20003707 U
(43) Veröffentlichungstag der Anmeldung: 06.02.2002
(73) Patentinhaber: ThyssenKrupp Presta AG, 9492 Eschen (LI)
(72) Erfinder: MÜLLER, Olaf, 65428 Rüsselsheim (DE)
(74) Vertreter: Lindner, Manfred Klaus
(86) Internationale Anmeldenummer: PCT/DE2001/000746
(87) Internationale Veröffentlichungsnummer: WO 2001/064497

(56) Entgegenhaltungen:
- WO-A-01/03991
- WO-A-98/22325
- WO-A-99/58389
- DE-C- 19 638 051
- GB-A- 2 304 866
- US-A- 5 570 901

## Beschreibung

Die Erfindung betrifft allgemein ein Lenksäule nach dem Oberbegriff des Anspruchs 1 und ein Herstellungsverfahren dafür nach dem Oberbegriff des Anspruchs 16.

Heutige Gehäuse für Lenksäulen für Automobile sind Blechkonstruktionen oder Zusammenbauten aus vornehmlich Alu- und Magnesiumgussteilen. Neue Anforderungen, wie mehrfache Lastbegrenzungen für verschiedene Unfallarten, integrierte Airbags, Bewegungszylinder für bestimmte Crasharten und anderes machen diese Bauteile immer aufwendiger.

Aus der DE 196 38 051 Cl ist eine Lenksäulenbaueinheit bekannt, die ein Strangpressprofil sowie Einrichtungen zur Längsverstellung und zur Höhenverstellung enthält. Dabei ist nachteilig, dass über die gesamte Längssäule in Baueinheit hinaus stehende Komponenten vorhanden sind, die im Falle eines Unfalls ein erhebliches zusätzliches Verletzungsrisiko für den Fahrer darstellen. Außerdem ist die Bauweise recht aufwendig, was sie zudem anfällig und teuer macht.

Die vorliegende Erfindung hat daher zum Ziel, eine Lenksäule derart auszugestalten, dass das Verletzungsrisiko für den Fahrer im Falle eines Unfalls geringer ist.

Das Ziel wird mit einer Lenksäule gemäß dem Anspruch 1 sowie einem Herstellungsverfahren dafür gemäß dem Anspruch 16 erreicht. Durch die Verwendung von zwei Strangpressprofilen, die die Einrichtungen zur Längsverstellung und zur Höhenverstellung der Lenksäule beinhalten, können über die Lenksäule insgesamt hinaus stehende Teile weitestgehend vermieden werden.

Insbesondere sind die Einrichtungen zur Längs- und/oder Höhenverstellung der Lenksäule in den Strangpressprofilen der Führungsplatte und des Außengehäuses untergebracht.

Alternativ oder zusätzlich kann vorgesehen sein, dass Einrichtungen zur unfallbedingten Verstellung der Lenksäule vom Fahrer weg in dem Strangpressprofil oder in den Strangpressprofilen untergebracht sind. Eine vorzugsweise Weiterbildung davon besteht darin, dass die Einrichtungen zur unfallbedingten Verstellung der Lenksäule vom Fahrer weg Lastabsorbtionseinrichtungen enthalten, die in dem Strangpressprofil oder in den Strangpressprofilen untergebracht sind, wobei die Lastabsorbtionseinrichtungen insbesondere zwei Lastabsorbtionen enthalten, die in Abhängigkeit vom Anschnallzustand und/oder der Größe des Fahrers aktivierbar oder deaktivierbar sind. Ferner ist es bei der vorliegenden Ausgestaltung vorteilhaft, wenn die Einrichtungen zur unfallbedingten Verstellung der Lenksäule vom Fahrer weg in den Strangpressprofilen der Führungsplatte und des Außengehäuses untergebracht sind. Außerdem können die Einrichtungen zur unfallbedingten Verstellung der Lenksäule vom Fahrer weg pyrotechnische Antriebsmittel enthalten, die in dem Strangpressprofil oder in den Strangpressprofilen untergebracht sind. Es ist weiterhin mit Vorzug vorsehbar, dass die Einrichtungen zur unfallbedingten Verstellung der Lenksäule vom Fahrer weg pyrotechnische Entriegelungseinrichtungen für die Längsverstellung der Lenksäule und/oder Ent- oder Verriegelungseinrichtungen für die Lastabsorbtionseinrichtungen enthalten.

Bei der erfindungsgemäßen Lenksäule kann ferner vorgesehen sein, dass in dem Strangpressprofil oder in den Strangpressprofilen Einrichtungen zum Knie- oder Beinschutz des Fahrers integriert sind. Diese die Einrichtungen zum Knie- oder Beinschutz des Fahrers enthalten bevorzugt einen Knie-/Beinairbag und/oder eine insbesondere zum Fahrer bei einem Unfall hin verstellbare und vorzugsweise lastabsorbierend gelagerte Knieaufprallplatte.

Das Ziel der Erfindung wird auch durch ein Herstellungsverfahren für eine Lenksäule nach dem Anspruch 16 erreicht.

Weitere vorzugsweise und vorteilhafte Ausgestaltungen der Erfindung ergeben sich aus der Kombination der Ansprüche sowie dem gesamten Offenbarungsgehalt der vorliegenden Unterlagen.

Die Erfindung wird anhand exemplarischer Ausführungsbeispiele nachfolgend unter Bezugnahme auf die Zeichnung näher erläutert. In der Zeichnung zeigen:
Fig.1 bis 11 verschiedene Schnitte eines grundsätzlichen ersten Ausführungsbeispiels der Lenkung mit einigen ggf. auch alternativen Gestaltungsvarianten, und
Fig. 12 bis 17 verschiedene Schnitte eines zweiten Ausführungsbeispiels der Lenkung mit einigen ggf. auch alternativen Gestaltungsvarianten.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

In allen Figuren der Zeichnung ist eine Lenksäule, soweit sie darin dargestellt oder sichtbar ist, allgemein mit dem Bezugszeichen 100 bezeichnet.

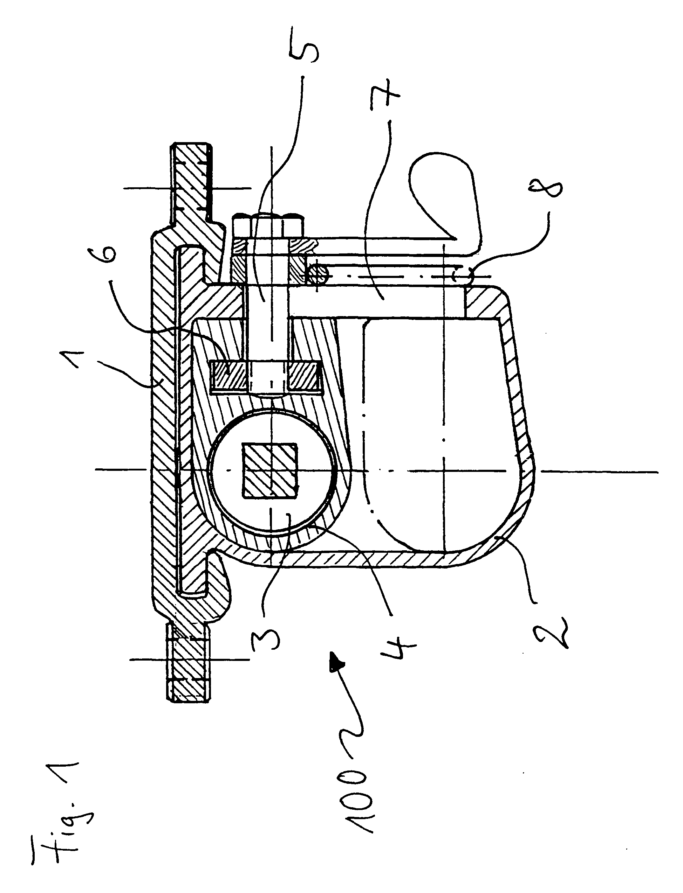

Die Fig. 1 zeigt eine besonders einfache Form einer längs- und höhenverstellbaren Lenkung, die beispielsweise mit einem Lastabsorbtionsblech (nicht gezeigt) versehen sein kann, in einer in einer Führungsplatte 1 integrierten Position. In dieser Führungsplatte 1 ist ein Außengehäuse 2 geführt, das sich beim Crash relativ zur Führungsplatte 1 unter z. B. Zerstörung/Lastabbau durch ein verformbares Lastabsorbtionsblech (nicht gezeigt) bewegt und das auch als Lenksäulengehäuse bezeichnet wird.

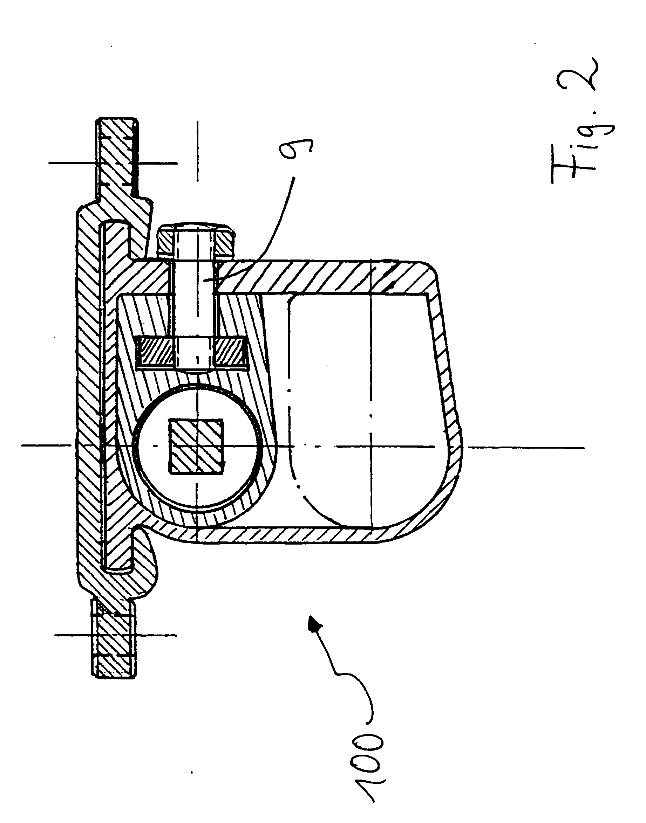

In diesem Außengehäuse 2 sitzt eine Lenkungswelle 3 in einem Lenkwellengehäuse 4. Dieses Lenkwellengehäuse 4 ist nach Lösen einer Feststellschraube 5 längs- und höhenverstellbar mittels eines Verstellhebels 6 mit einem Klemmelement in einem Verstellschlitz 7. Hierbei wirkt eine Ausgleichsfeder 8 in Form einer "Wickelfeder" dem Gewicht der Lenkwelle 3 entgegen. Die Fig. 2 zeigt die Lagerung des Lenkwellengehäuses 4 in einem Schwenklager 9.

Alle Teile dieser höhen- und längsverstellbaren Lenkung sind kostengünstig als Strangpressprofil hergestellt. Das in der Führungsplatte 1 für den Crashfall verschiebbare Außengehäuse 2 umschließt komplett das höhen- und längsverstellbare Lenkungswellengehäuse 4. Dies hat den Vorteil, dass es keine überstehenden beim Crash knieverletzende Bauteile gibt. Auch die Feststellschraube 5 ist kostensparend in einem Längsschlitz des Strangpressprofiles des Lenkungswellengehäuses 4 geführt. Auch das Schwenklager 9 ist in diesem Verstellschlitz 7 positioniert und selbstverständlich schwenkbar gelagert im Außengehäuse 2. Alles in allem ist dies ein kostengünstiger, kompakter längs- und höhenverstellbarer Lenksäulenzusammenbau ohne beim Crash verletzende überstehende Teile.

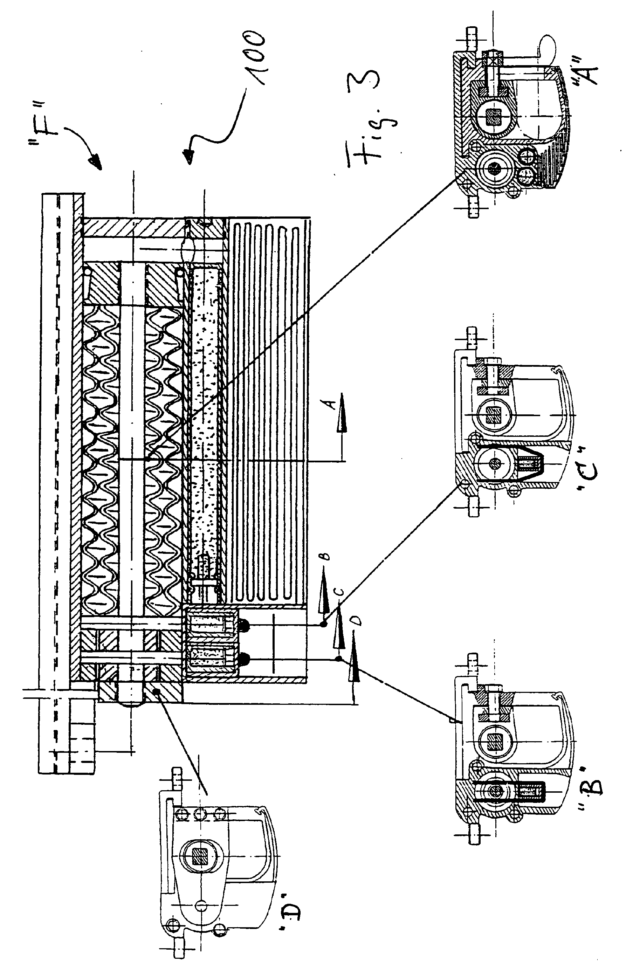

Die Fig. 3 zeigt eine Erweiterung dieser Lenkung auf die Anforderung, einen lenkungsintegrierten Airbag, zwei crashabhängige Lastabsorptionen und eine aktive pyrotechnisch aktivierte Lenkung zu haben. Die Fig. 3 zeigt die Zugehörigkeit der Schnitte der folgenden Abbildungen als Übersicht. Auch hier wird das erfindungsgemäße Ziel erreicht, auf einfachste und kostengünstigste Art weitere Elemente der passiven Sicherheit im Strangpressprofil eines "erweiterten" Außengehäuses 2 aus Fig.1 und 2 unterzubringen.

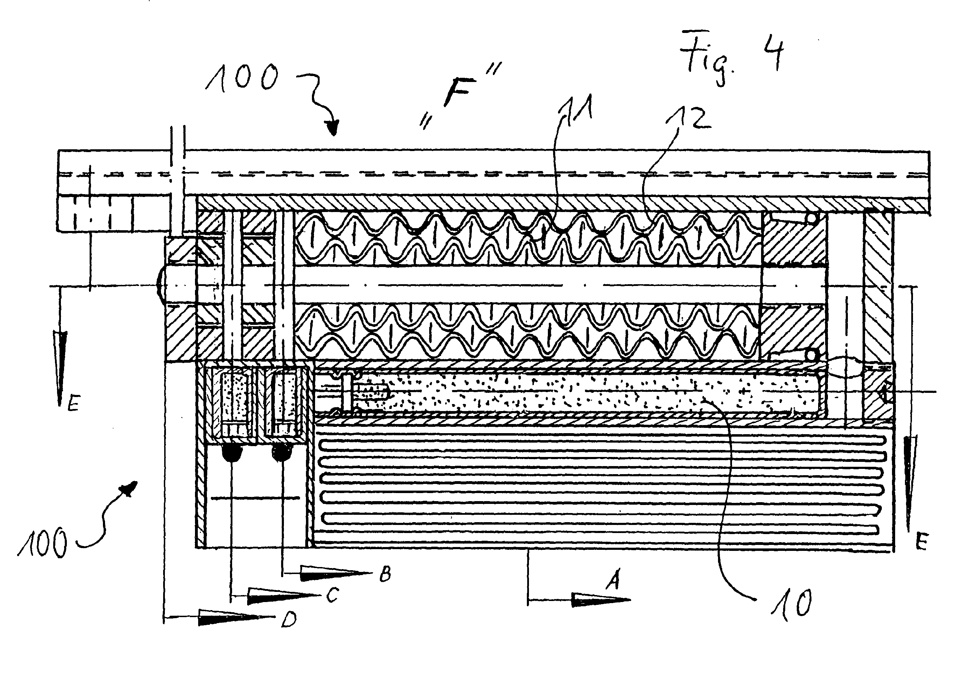

Die Fig. 4 zeigt vergrößert den Längsschnitt F der Fig. 3 mit Lastabsorptionen 11 und 12, die Lastabsorbtionseinrichtungen bilden, und einem pyrotechnischen Antriebsgenerator 10. Zwei ineinander geschachtelte Lastabsorptionen 11 und 12 sind in einem zylinderförmigen Hohlraum 30 gleichzeitig untergebracht mit einem Kolben 15 und einer Kolbenstange 22 verbunden für später beschriebene Crash-Alternativen. Weiter zeigt der Längsschnitt der Fig. 4 den bei Bedarf benötigten Generator 10 zum "Absenken" der Lenkung (nicht gezeigt). Alle diese Elemente sind einfach im Strangpressprofil des Außengehäuses 2 untergebracht. An der Unterseite des Strangpressprofil-Außengehäuses 2 befinden sich pyrotechnischen Patronen 17 und 20 zur crashsituationsabhängigen Entriegelung der Lastabsorption(en) 11 und/oder 12.

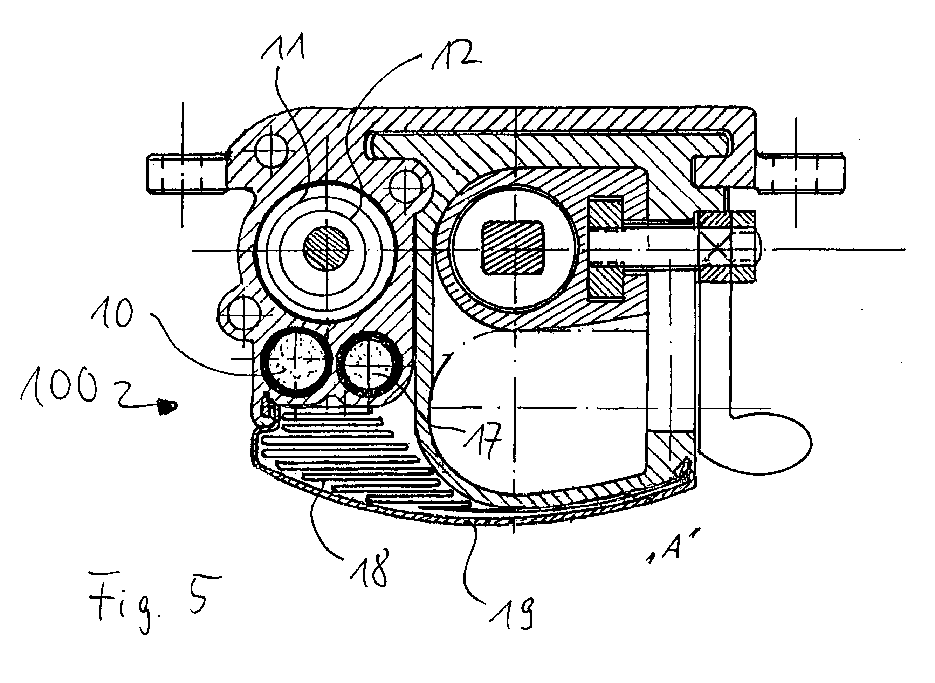

Im Schnitt A der Fig. 3, der in der Fig.5 gezeigt ist, ist im Außengehäuse 2 die Lagerung der Lastabsorptionen 11 und 12 und neben dem Generator 10 für die Verstellung des Kolbens 15 die Lagerung eines Generators 17 für einen Airbag 18 gezeigt. Letzterer wird durch eine Abdeckung 19 verschlossen. Weitere Einzelheiten entsprechen denen der vorangegangenen Fig. 1 bis 4. Dieser Schnitt A zeigt ferner die ineinander gesteckte Lenkung entsprechend den Fig. 1 und 2 mit einer Führungsplatte ähnlich der Führungsplatte 1 in veränderter Form zur Aufnahme der zuvor erwähnten Elemente. Alle Elemente sind optimal "geschachtelt" und in Richtung des Strangpressprofils untergebracht.

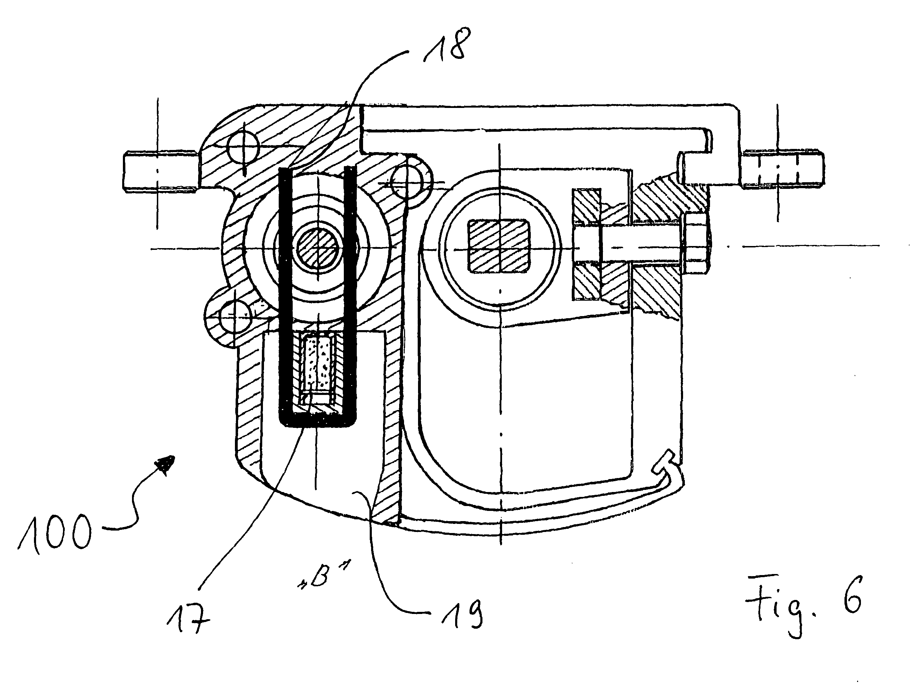

Im Schnitt B der Fig. 3, der in der Fig. 6 dargestellt ist, ist ein auf das Außengehäuse 2 aufgeschraubtes Entriegelungsgehäuse 19 im Schnitt gezeigt. Man sieht eine Entriegelung 18 (in diesem Fall als Spange). Es können auch Bolzen, Platten o.ä. sein. Eine pyrotechnische Patrone 17 zieht bei einem Unfall gemäß einer vorgegebenen Programmierung nach einer Lastabsorption die Entriegelung 18 der Lastabsorption 12 weg.

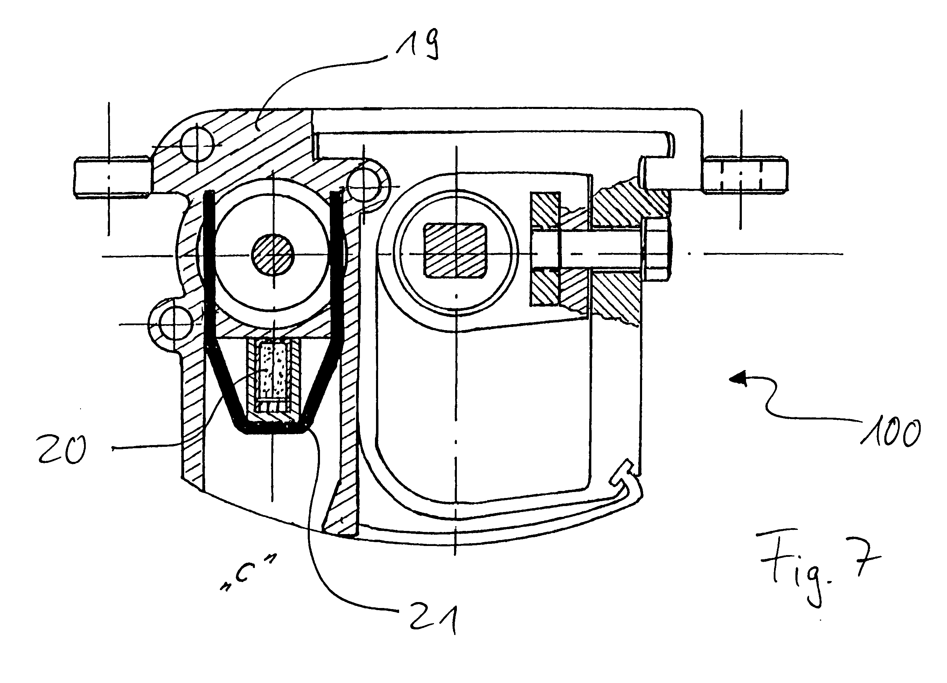

Im Schnitt C der Fig. 3, der in der Fig. 7 gezeigt ist, ist die Entriegellösung des äußeren Lastabsorbers 11 zu sehen. Hierzu gehört eine zweite Patrone 20.

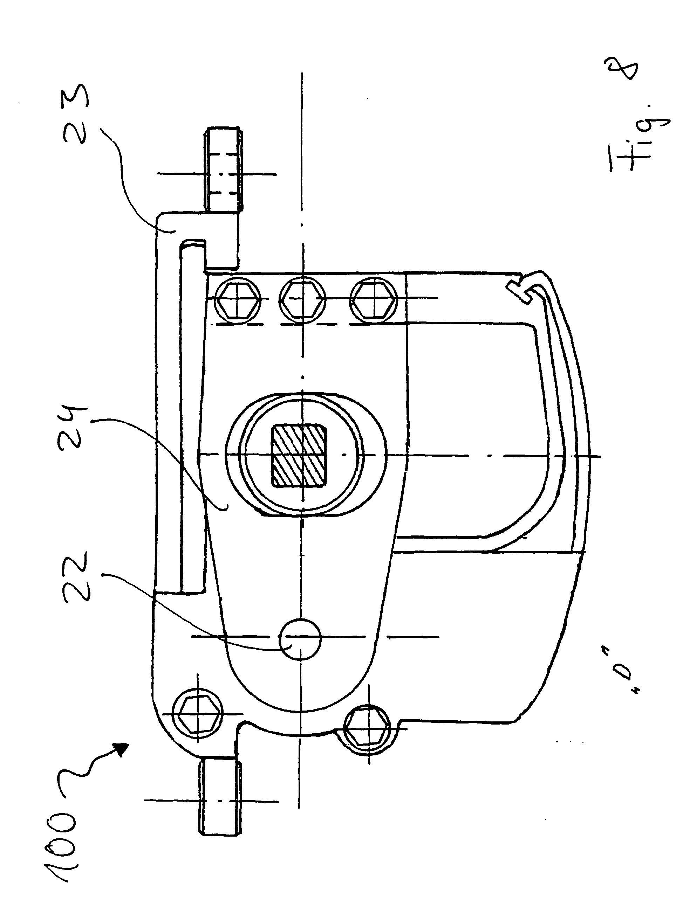

Im Schnitt D der Fig. 3, der in der Fig. 8 veranschaulicht ist, ist eine Verbindungslasche 24 gezeigt, die über eine Kolbenstange 22 mit dem "Aussengehäuse" 23 wiederum über die Lastabsorption 11 und 12 verbunden ist.

### Funktion bei einem Unfall oder Crash

Die crashrelevanten Anforderungen an eine Lenkung der beschriebenen Ausführung wurden grundsätzlich in der WO 0103991 A1 desselben Anmelders beschrieben. Der Offenbarungsgehalt dieser PCT-Anmeldung hinsichtlich der Funktion einer rückziehbaren Lenksäule ist zur Vermeidung der bloßen wiederholenden Wiedergabe hiermit vollumfänglich in die vorliegenden Unterlagen aufgenommen.

Ist ein großer Mann nicht angeschnallt (Feststellung z. B. mittels Schalter im Gurtschloss), so benötigt er beide Lastabsorptionen 11 und 12, um bei der Bewegung des inneren zum äußeren Gehäuse genügend Energie aufzuzehren. Ist der Fahrer angeschnallt, wird die innere Lastabsorption 12 entriegelt, und es wird nur die Lastabsorption 11 wirksam.

Sitzt eine kleine Person dicht vor dem Lenkrad, so braucht diese keine Lastabsorption (Airbag reicht). Beide Lastabsorptionen 11 und 12 werden entriegelt und das innere Gehäuse wird mit der daran befestigten Lenksäule nach vom gefahren um genügend Abstand zur Person zu schaffen. Festgestellt wird die Anwesenheit der kleinen Personen beispielsweise durch elektrische Sitzpositionserkennung in den Sitzschienen und Gurtauszugs- und/oder Gewichtserkennung. Ein Knieairbag ist mit seinem Generator und Gewebe ebenso integrierter Bestandteil des Strangpressprofiles.

Vorteile sind die einfachste Herstellung der sehr komplizierten Gehäuse mit vielfachen Elementen, die derart angeordnet sind, dass sie ihre vorbestimmten Bewegungen parallel in Längsrichtung bzw. senkrecht dazu ausführen können.

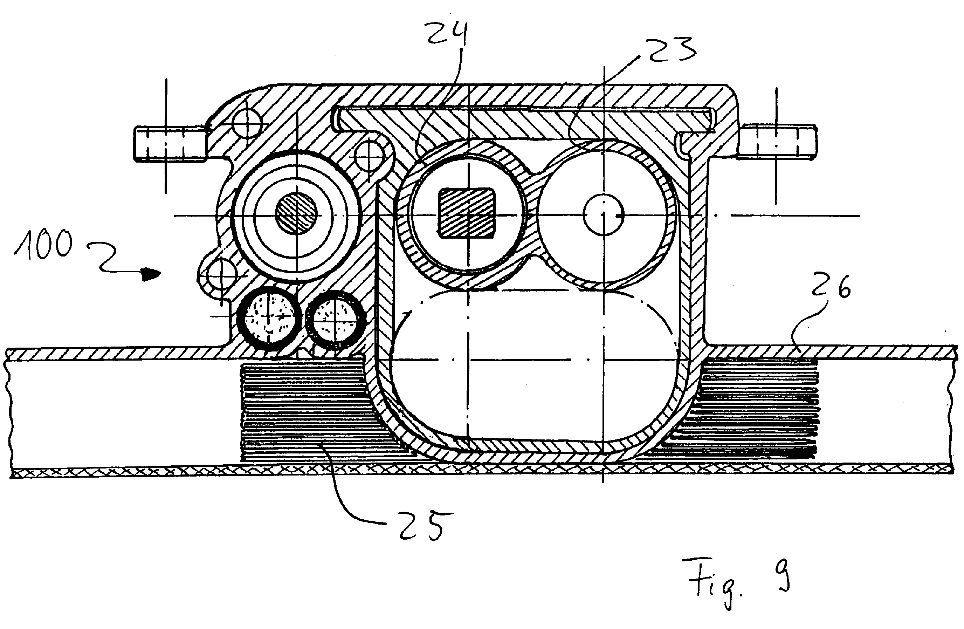

Im Schnittbild der Fig. 9 ist eine weitere Alternative gezeigt, bei der das Gehäuse 23 für die Längs- und Höhenverstellung der Lenksäule mit Elektromotoren (nicht gezeigt) integrales Bestandteil des Lenkwellengehäuses 24 ist. Außerdem ist bei dieser Alternative ein Knieairbag 25 derart integriert, dass eine rückwärtige Abstützwand 26 integraler Bestandteil des Außengehäuses 26 ist. Beide Verstellmotoren (nicht gezeigt) stecken in Reihe derart im Gehäuse, dass der hintere mit seiner rückwärtigen Getriebespindel (nicht gezeigt) die Längsverstellung vornimmt und der vordere Motor mit einer senkrecht gestellten Getriebespindel (nicht gezeigt) die Höhenverstellung vornimmt. Auch hier ist alles "strangprofilgerecht" ausgeführt.

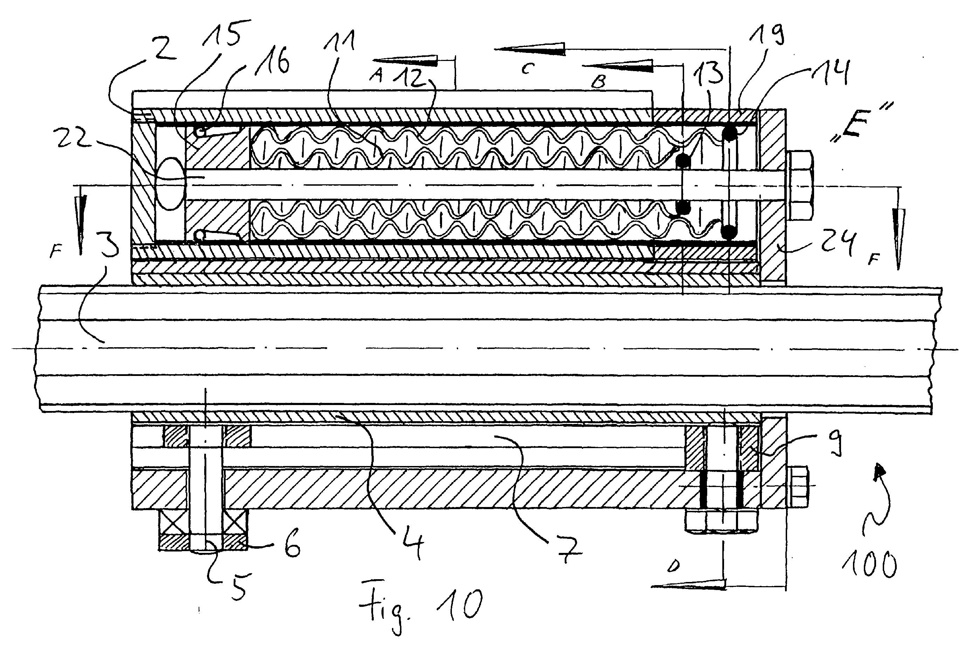

Die Fig. 10 zeigt im Horizontalschnitt E die Lenkungswelle 3 im Lenkungswellengehäuse 4, die Feststellschraube 5 und das Schwenklager 9. Parallel dazu liegt das Außengehäuse 2 mit den Lastabsorptionen 10 und 12 und den dazu gehörigen Entriegelungen 13 und 14 im Entriegelungsgehäuse 19. Angetrieben wird die Lenkung nach vorn durch den Kolben 15 auf der Kolbenstange 22 bei kleinen Fahrern und in der zweiten Crashphase. Eine Rücklaufsperre 16 verhindert, dass eine einmal nach vom gefahrene Lenkung wieder durch die Stirnwand zurückgedrückt werden kann. Lastabsorptionen 13 und 14 und der Kolben 15 sind mit einer Verbindungslasche 24 zur Kraftübertragung miteinander verbunden, wie weiter vorne im Zusammenhang mit der Fig. 8 beschrieben und in letzterer gezeigt ist.

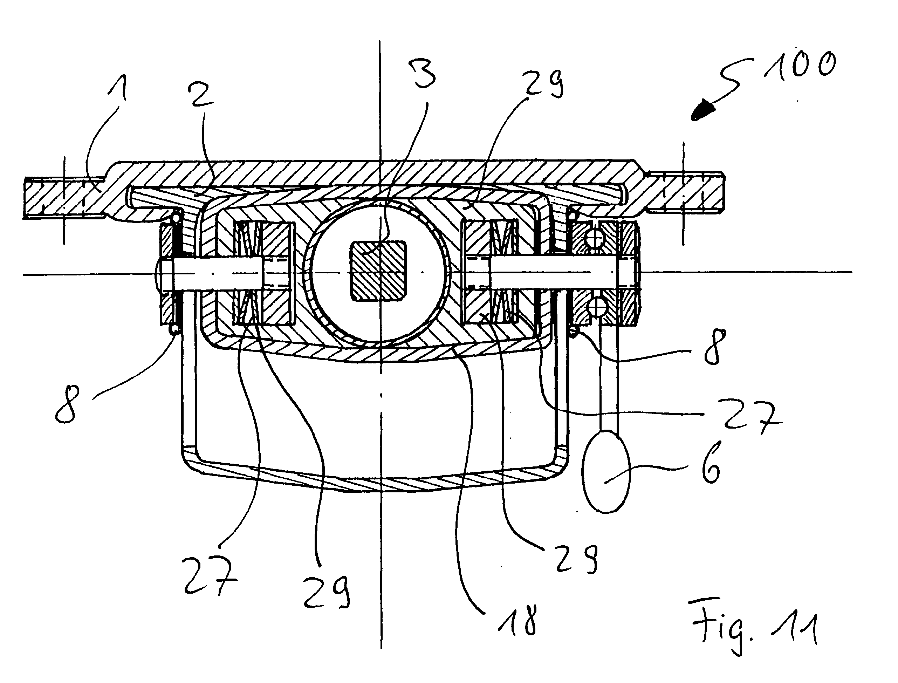

Die Fig. 11 zeigt als Alternative zu den Basisausführungen in den Fig. 1 und 2 die beidseitige Verrastung der Komfortverstellung. Das ist aufwendiger, aber evtl. vorteilhaft zum Abbau von Schwingungen. Von links nach rechts wird die Toleranz erfindungsgemäß durch je einen Tellerfederblock 27 ausgeglichen. Ein Lastübertragungsgehäuse 28 aus festem Material umschließt das erfindungsgemäß aus Leichtmetall-Strangpressprofil hergestellte Lenkungswellengehäuse 4 zur Aufnahme der Lenkungswelle 3 der Gleitsteine 29 und der Tellerfedern 27.

Auch das ist eine Lösung, bei der die Vorzüge eines Strangprozessprofiles voll zum Tragen kommen. Die Vorzüge von Strangprozessprofilen liegen darin begründet, dass mit geringen Werkzeugkosten Spritzmatrizen erstellt werden, bei denen komplizierte Bauformen (Löcher, Nuten, Wände, Abstellungen) gespritzt werden können, wenn diese grundsätzlich parallel in einer Richtung verlaufen. Die gezeigten Lenksäulen wurden daher in verschiedenen Ausführungsformen dargestellt und die komplexe Unterbringung von Lastabsorbern, Kolben, pyrotechnischen Treibsätzen, Bauteilführungen, Anschraublöchern usw. integriert in einem einzigen bzw. in zwei zueinander beim Crash beweglichen Bauteilen gezeigt.

Die Fig. 12 zeigt als weitere Ausführungsalternative die Kombination einer Führungsplatte mit Lastabsorbern, pyrotechnischer Verstellung im Crashfalle und Knieairbag ähnlich wie in den vorstehenden Ausführungsbeispielen dargestellt und dazu beschrieben, und weiterhin in Kombination mit einer Lenksäulenverstellung mit Blechlaschen.

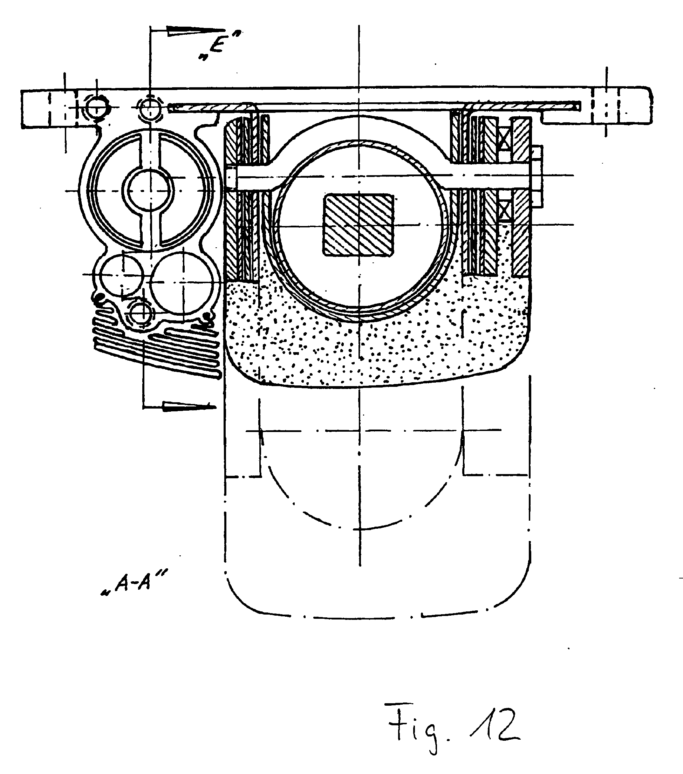

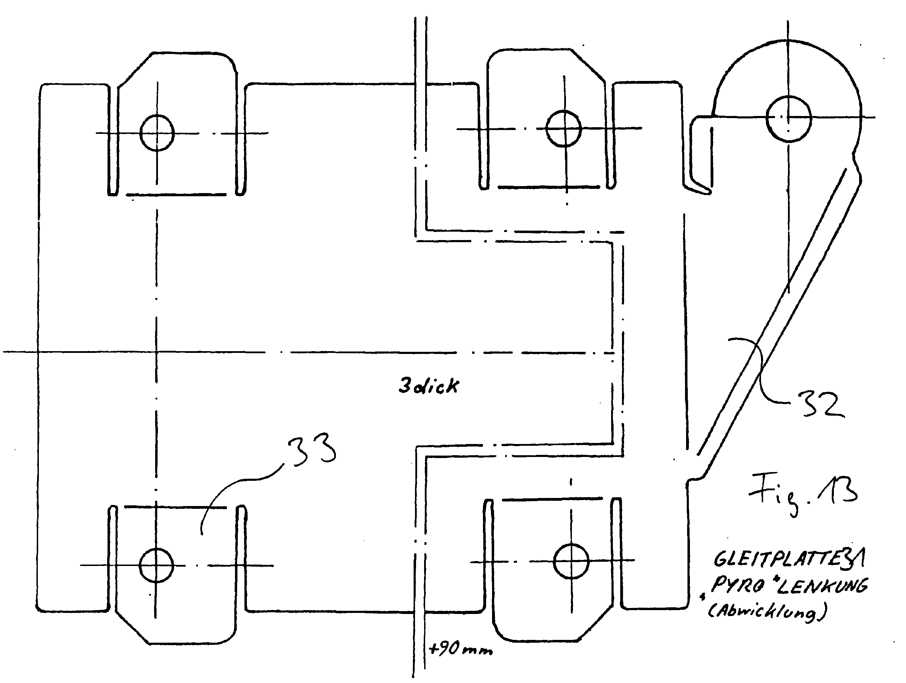

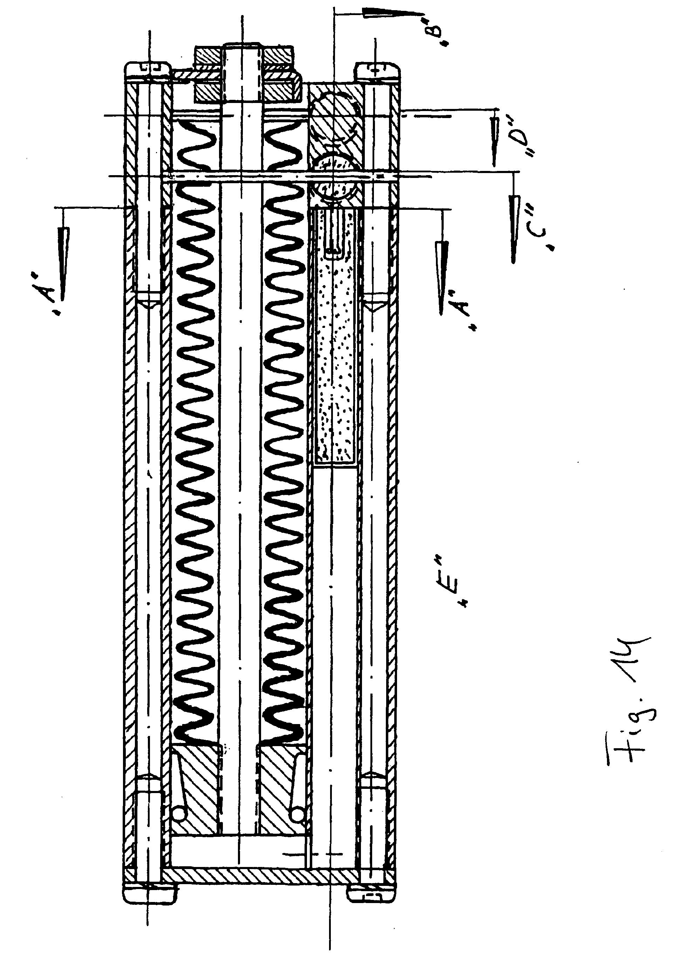

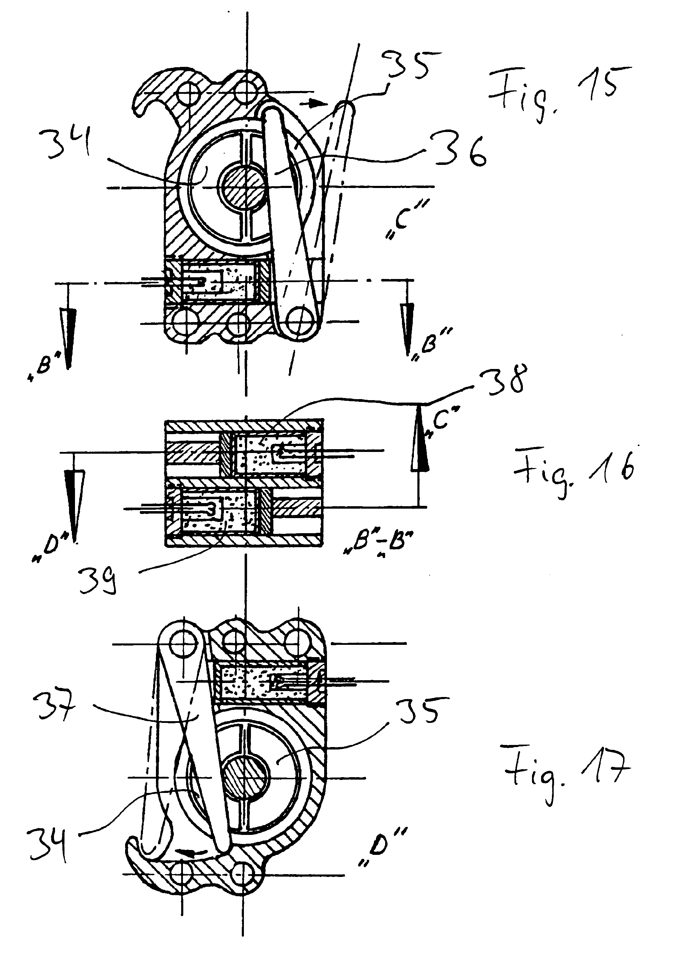

Zur Aufnahme dieser neuartigen Lenkung wird eine Gleitplatte 31 gemäß der Fig. 13 mit einem integrierten Mitnehmer 32 für Lastabsorber 34 und 35 und die Kolbenstange 22 erfindungsgemäß ausgeführt. Die Fig. 14 zeigt einen entsprechend der Fig. 4 ähnlichen Schnitt dieser Ausführung und wird deshalb nicht gesondert beschrieben bis auf folgende Unterschiede: Die Fig. 15 zeigt in der Mitte geteilte Wellenrohre als die Lastabsorber 34 und 35. In der Fig. 15 Schnitt C wird gezeigt, wie ein Hebel 36 den Lastabsorber 35 verriegelt bzw. bei bestimmten beschriebenen Crashgegebenheiten "entriegelt". Die Fig. 17 zeigt parallel die Ver- bzw. Entriegelung des Lastabsorbers 34 mittels eines Hebels 37 je nach beschriebener Crashgegebenheit. Die Fig. 16 zeigt die pyrotechnischen Entriegelungspatronen 38 und 39 im Schnitt B.

Die Fig. 14 zeigt die Lage der Schnitte A, B und C im Lenkungsgehäuse 40. Weiter zeigt die Fig. 14 die Gehäuse 41 und 42 für die Entriegelung der Lastabsorber 34 und 35 entsprechend den Fig. 15, 16 und 17 von vorne und im aufgeschraubten Zustand.

Vorteile der einzelnen Varianten, wie sie aus den Figuren der Zeichnung ersichtlich sind, werden nachfolgend angegeben.

Aus den Ansichten der Fig. 1 und 2 ist ersichtlich, dass die Führungsplatte und das Lenkungsgehäuse mit einem integrierten Höhen- und Längsverstellmechanismus durch Verwendung von Strangpressprofilen vorteilhaft hergestellt ist. Insbesondere ist es dabei möglich, den Verstellmechanismus derart innerhalb des Lenkgehäuses unterzubringen, dass dadurch keine Verletzungen bei einem Unfall entstehen können.

Anhand der Fig. 3 bis 5 wird deutlich, dass die Führungsplatte, das Lenkungsgehäuse, das für einen Crash-Fall verschiebbar ist, und die höhen- und längsverstellbare Lenksäule jeweils aus Strangpressprofil hergestellt sind, was die bereits dargelegten Kostenvorteile zur Folge hat.

Die durch die Erfindung in Form der Verwendung von Strangpressprofilen ebenfalls ersichtliche package-optimierte Ineinanderschachtelung bringt weitere Vorteile beispielsweise beim Platzbedarf. Weiterhin ist vorteilhaft, dass die Führungsplatte in Profillaufrichtung ausgebildet ist und als Aufnahme für die längs- und höhenverstellbare Lenkung, den insbesondere geschachtelt ausgeführten Lastabsorber, vorzugsweise verwendete Antriebskolben und pyrotechnische Antriebskartuschen für eine Lenkungsverstellung im Crashfall und einen Knieairbag dienen kann. Gerade die mögliche Integration des Knieairbags einschließlich des z. B. durch eine Platte abgedeckten Gewebes ist ein weiterer Vorteil.

Die Ansichten der Fig. 6 und 7 verdeutlichen die Möglichkeit einer Integration von Entriegelungseinheiten passend stirnseitig zu den Profilen zum wechselweisen Entriegeln der Lastabsorber.

Die Verbindung des gleitend gelagerten Lenkungsgehäuses im Führungsgehäuse verbunden mit einem Mitnehmerarm für die Bewegung der Lenkung gegen einen oder zwei Lastabsorber, je nach Anschnallzustand des Fahrers (angeschnallt oder nicht angeschnallt), oder das in Fahrtrichtung des Fahrzeuges nach vorne, also vom Fahrer weg, "Schiessen" der Lenkung mittels einer pyrotechnischen Ladung unter Verwendung eines Kolbens mit Rücklaufsperre bei kleinen Fahrern und in der zweiten Crashphase ist durch die Darstellung in der Fig. 8 verdeutlicht.

Aus der Ansicht der Fig. 9 ergibt sich die Integration eines Knieairbags und der dazu notwendigen Abstützplatte sowie einer alternativen Knieaufschlagplatte in die Strangpressprofile.

Die Fig. 11 verdeutlicht die Ausführung der Lenksäule mit beidseitiger toleranzausgleichender Verrastung für eine Längsverstellung integriert in einem Strangpressprofilgehäuse. Dieses Gehäuse ist wiederum integriert in einem Gehäuse aus Strangpressprofil zur Höhenverstellung, das gleichzeitig verschiebbar bei einem Crash gegen einen Lastabsorber gelagert ist in einer ebenso aus Strangpressprofil gefertigten Führungsplatte.

Sämtliche vorbeschriebenen Merkmale entsprechend den Inhalten der Fig. 3 bis 10 sind in der Ausführung gemäß der Darstellung der Fig. 12 zusätzlich mit einer Lenkung mit einer "Laschenverstellmechanik" kombiniert. Dazu zeigt die Fig. 13 eine Gleitplatte aus Blech mit integrierten Lagerböcken für die Verstell-laschen zur Höhenverstellung der Lenkung. Diese Gleitplatte kann einen integrierten Mitnehmer zwischen dem crashrelevanten Verschiebeteil der Lenkung und der pyrotechnischen Verstelleinheit und den Lastabsorbern aufweisen.

Die auf die Leistungseinheit aufgesetzten pyrotechnisch angetriebenen Schalteinheiten zum Ver- und Entriegeln der Lastabsorber mittels Schwenkhebeln sind in den Fig. 15 bis 17 ersichtlich.

Die Erfindung ist anhand der Ausführungsbeispiele in der Beschreibung und in den Zeichnungen lediglich exemplarisch dargestellt und nicht darauf beschränkt, sondern umfasst alle Variationen im Rahmen der Ansprüche.

### Bezeichnungen

- 1: Führungsplatte
- 2: Außengehäuse
- 3: Lenkungswelle
- 4: Lenkungswellengehäuse
- 5: Feststellungsschraube
- 6: Verstellhebel
- 7: Verstellschlitz
- 8: Ausgleichsfeder
- 9: Schwenklager
- 10: Generator
- 11: Lastabsorption
- 12: Lastabsorption
- 13: Entriegelung
- 14: Entriegelung
- 15: Kolben
- 16: Rücklaufsperre
- 17: Patrone
- 18: Entriegelung innerer Lastabsorber
- 19: Entriegelungsgehäuse
- 20: Patrone
- 21: Entriegelung der äußeren Lastabsorption
- 22: Kolbenstange
- 23: Gehäuse
- 24: Verbindungslasche
- 25: Knieairbag
- 26: Abstützwand
- 27: Tellerfedern
- 28: Lastübertragungsgehäuse
- 29: Gleitsteine
- 30: zylinderförmiger Hohlraum
- 31: Gleitplatte
- 32: Mitnehmer
- 33: Lagerböcke
- 34: Lastabsorber
- 35: Lastabsorber
- 36: Hebel
- 37: Hebel
- 38: Entriegelungspatrone
- 39: Entriegelungspatrone
- 40: Lenkungsgehäuse
- 100: Lenksäule

## Patentansprüche

1. Lenksäule mit Einrichtungen zur Längsverstellung und zur Höhenverstellung sowie einem Strangpressprofil, **dadurch gekennzeichnet,**
**dass** ein zweites Strangpressprofil enthalten ist,
**dass** eines der Strangpressprofile in dem anderen Strangpressprofil geführt ist, und
**dass** die Einrichtungen zur Längsverstellung und zur Höhenverstellung der Lenksäule (100) in den zwei ineinander geführten Strangpressprofilen untergebracht sind.

2. Lenksäule nach Anspruch 1, **dadurch gekennzeichnet, dass** die beiden Strangpressprofile ineinander geschachtelt sind.

3. Lenksäule nach Anspruch 1 oder 2, **dadurch gekennzeichnet, dass** die zwei ineinander geführten oder geschachtelten Strangpressprofile einerseits ein Außengehäuse (2) der Lenksäule (100) und andererseits ein darin geführtes Lenkwellengehäuse (4) für eine Lenkwelle (3) sind.

4. Lenksäule nach Anspruch 3, **dadurch gekennzeichnet, dass** die Einrichtungen zur Längsverstellung und zur Höhenverstellung der Lenksäule (100) in dem Außengehäuse (2) der Lenksäule (100) einen Verstellschlitz (7) enthalten, dem eine Feststellschraube (5) und ein Schwenklager (9) für die Höhenverstellung der Lenksäule (100) zugeordnet sind.

5. Lenksäule nach Anspruch 3 oder 4, **dadurch gekennzeichnet, dass** die Einrichtungen zur Höhenverstellung der Lenksäule (100) eine Ausgleichsfeder (8) enthalten, die dem Gewicht einer Lenkwelle (3) entgegenwirkt.

6. Lenksäule nach einem der vorhergehenden Ansprüche, **dadurch gekennzeichnet, dass** die zwei ineinander geführten oder geschachtelten Strangpressprofile mit den Einrichtungen zur Längsverstellung und zur Höhenverstellung der Lenksäule (100) als Einheit in einer Führungsplatte (1) geführt sind, die ebenfalls als Strangpressprofil ausgeführt ist.

7. Lenksäule nach Anspruch 1 oder 2, **dadurch gekennzeichnet, dass** die zwei ineinander geführten oder geschachtelten Strangpressprofile einerseits eine Führungsplatte (1) und andererseits ein darin geführtes Außengehäuse (2) der Lenksäule sind, und dass die Einrichtungen zur Längs- und/oder Höhenverstellung der Lenksäule (100) in den Strangpressprofilen der Führungsplatte (1) und des Aussengehäuses (2) untergebracht sind.

8. Lenksäule nach einem der vorhergehenden Ansprüche, **dadurch gekennzeichnet, dass** Einrichtungen zur unfallbedingten Verstellung der Lenksäule (100) vom Fahrer weg in dem Strangpressprofil oder in den Strangpressprofilen untergebracht sind.

9. Lenksäule nach Anspruch 8, **dadurch gekennzeichnet, dass** die Einrichtungen zur unfallbedingten Verstellung der Lenksäule (100) vom Fahrer weg Lastabsorbtionseinrichtungen enthalten, die in dem Strangpressprofil oder in den Strangpressprofilen untergebracht sind.

10. Lenksäule nach Anspruch 9, **dadurch gekennzeichnet, dass** die Lastabsorbtionseinrichtungen zwei Lastabsorbtionen (11, 12) enthalten, die in Abhängigkeit vom Anschnallzustand und/oder der Grösse des Fahrers aktivierbar oder deaktivierbar sind.

11. Lenksäule nach einem der Ansprüche 8 bis 10 in Verbindung mit Anspruch 6 oder 7, **dadurch gekennzeichnet, dass** die Einrichtungen zur unfallbedingten Verstellung der Lenksäule (100) vom Fahrer weg in den Strangpressprofilen der Führungsplatte (1) und des Aussengehäuses (2) untergebracht sind.

12. Lenksäule nach einem der Ansprüche 8 bis 11, **dadurch gekennzeichnet, dass** die Einrichtungen zur unfallbedingten Verstellung der Lenksäule (100) vom Fahrer weg pyrotechnische Antriebsmittel enthalten, die in dem Strangpressprofil oder in den Strangpressprofilen untergebracht sind.

13. Lenksäule nach einem der Ansprüche 8 bis 12, **dadurch gekennzeichnet, dass** die Einrichtungen zur unfallbedingten Verstellung der Lenksäule (100) vom Fahrer weg pyrotechnische Entriegelungseinrichtungen für die Längsverstellung der Lenksäule (100) und/oder Ent- oder Verriegelungseinrichtungen für die Lastabsorbtionseinrichtungen enthalten.

14. Lenksäule nach einem der vorhergehenden Ansprüche, **dadurch gekennzeichnet, dass** in dem Strangpressprofil oder in den Strangpressprofilen Einrichtungen zum Knie- oder Beinschutz des Fahrers integriert sind.

15. Lenksäule nach Anspruch 14, **dadurch gekennzeichnet, dass** die Einrichtungen zum Knie- oder Beinschutz des Fahrers einen Knie-/Beinairbag (25) und/oder eine insbesondere zum Fahrer bei einem Unfall hin verstellbare und vorzugsweise lastabsorbierend gelagerte Knieaufprallplatte enthalten.

16. Herstellungsverfahren für eine Lenksäule, wobei Einrichtungen zur Längsverstellung und zur Höhenverstellung sowie ein Strangpressprofil kombiniert werden, **dadurch gekennzeichnet, dass** ein weiteres zweites Strangpressprofil enthalten so in dem anderen ersten Strangpressprofil angeordnet wird, dass es darin geführt ist, und dass die Einrichtungen zur Längsverstellung und zur Höhenverstellung der Lenksäule (100) in den zwei ineinander geführten Strangpressprofilen untergebracht werden.

17. Herstellungsverfahren für eine Lenksäule nach Anspruch 16, **dadurch gekennzeichnet, dass** die beiden Strangpressprofile so angeordnet werden, dass sie ineinander geschachtelt sind.

18. Herstellungsverfahren für eine Lenksäule nach Anspruch 16 oder 17, **dadurch gekennzeichnet, dass** die zwei ineinander geführten oder geschachtelten Strangpressprofile einerseits ein Außengehäuse (2) der Lenksäule (100) und andererseits ein darin geführtes Lenkwellengehäuse (4) für eine Lenkwelle (3) sind.

19. Herstellungsverfahren für eine Lenksäule nach einem der Ansprüche 16 bis 18, **dadurch gekennzeichnet, dass** die zwei ineinander geführten oder geschachtelten Strangpressprofile mit den Einrichtungen zur Längsverstellung und zur Höhenverstellung der Lenksäule (100) so angeordnet werden, dass sie als Einheit in einer Führungsplatte (1) geführt werden, die ebenfalls als Strangpressprofil ausgeführt ist.

20. Herstellungsverfahren für eine Lenksäule nach Anspruch 16 oder 17, **dadurch gekennzeichnet, dass** die zwei ineinander geführten oder geschachtelten Strangpressprofile einerseits eine Führungsplatte (1) und andererseits ein darin geführtes Außengehäuse (2) der Lenksäule sind, und dass die Einrichtungen zur Längs- und/oder Höhenverstellung der Lenksäule (100) in den Strangpressprofilen der Führungsplatte (1) und des Aussengehäuses (2) untergebracht sind.

21. Herstellungsverfahren für eine Lenksäule nach einem der Ansprüche 16 bis 20, **dadurch gekennzeichnet, dass** Einrichtungen zur unfallbedingten Verstellung der Lenksäule (100) vom Fahrer weg in dem Strangpressprofil oder in den Strangpressprofilen untergebracht werden.

22. Herstellungsverfahren für eine Lenksäule nach Anspruch 21, **dadurch gekennzeichnet, dass** die Einrichtungen zur unfallbedingten Verstellung der Lenksäule (100) vom Fahrer weg Lastabsorbtionseinrichtungen enthalten, die in dem Strangpressprofil oder in den Strangpressprofilen untergebracht werden.

23. Herstellungsverfahren für eine Lenksäule nach Anspruch 21 oder 22 in Verbindung mit Anspruch 19 oder 20, **dadurch gekennzeichnet, dass** die Einrichtungen zur unfallbedingten Verstellung der Lenksäule (100) vom Fahrer weg in den Strangpressprofilen der Führungsplatte (1) und des Aussengehäuses (2) untergebracht werden.

24. Herstellungsverfahren für eine Lenksäule nach einem der Ansprüche 21 bis 23, **dadurch gekennzeichnet, dass** die Einrichtungen zur unfallbedingten Verstellung der Lenksäule (100) vom Fahrer weg pyrotechnische Antriebsmittel enthalten, die in dem Strangpressprofil oder in den Strangpressprofilen untergebracht werden.

25. Herstellungsverfahren für eine Lenksäule nach einem der Ansprüche 21 bis 24, **dadurch gekennzeichnet, dass** die Einrichtungen zur unfallbedingten Verstellung der Lenksäule (100) vom Fahrer weg pyrotechnische Entriegelungseinrichtungen für die Längsverstellung der Lenksäule (100) und/oder Ent- oder Verriegelungseinrichtungen für die Lastabsorbtionseinrichtungen enthalten.

26. Herstellungsverfahren für eine Lenksäule nach einem der Ansprüche 16 bis 25, **dadurch gekennzeichnet, dass** in dem Strangpressprofil oder in den Strangpressprofilen Einrichtungen zum Knie- oder Beinschutz des Fahrers integriert werden.

27. Herstellungsverfahren für eine Lenksäule nach Anspruch 26, **dadurch gekennzeichnet, dass** die Einrichtungen zum Knie- oder Beinschutz des Fahrers einen Knie-/Beinairbag (25) und/oder eine insbesondere zum Fahrer bei einem Unfall hin verstellbare und vorzugsweise lastabsorbierend gelagerte Knieaufprallplatte enthalten.

## Claims

1. Steering column with devices for longitudinal adjustment and for height adjustment and an extruded profile, **characterised in that**
a second extruded profile is contained,
one of the extruded profiles is guided in the other extruded profile, and
the devices for longitudinal adjustment and for height adjustment of the steering column (100) are housed in the two extruded profiles guided one inside the other.

2. Steering column according to claim 1, **characterised in that** the two extruded profiles are inserted one inside the other.

3. Steering column according to claim 1 or 2, **characterised in that** the two extruded profiles guided or inserted one inside the other are on the one hand an outer housing (2) of the steering column (100) and on the other hand a steering shaft housing (4) for a steering shaft (3) guided therein.

4. Steering column according to claim 3, **characterised in that** the devices for longitudinal adjustment and for height adjustment of the steering column (100) in the outer housing (2) of the steering column (100) contain an adjusting slot (7), to which a locking screw (5) and a swivel bearing (9) are assigned for height adjustment of the steering column (100).

5. Steering column according to claim 3 or 4, **characterised in that** the devices for height adjustment of the steering column (100) contain a compensating spring (8) which works against the weight of a steering shaft (3).

6. Steering column according to one of the preceding claims, **characterised in that** the two extruded profiles guided or inserted one inside the other with the devices for longitudinal adjustment and for height adjustment of the steering column (100) are guided as a unit in a guide plate (1) which is likewise formed as an extruded profile.

7. Steering column according to claim 1 or 2, **characterised in that** the two extruded profiles guided or inserted one inside the other are on the one hand a guide plate (1) and on the other hand an outer housing (2) of the steering column guided therein, and **in that** the devices for longitudinal and / or height adjustment of the steering column (1) are housed in the extruded profiles of the guide plate (1) and of the outer housing (2).

8. Steering column according to one of the preceding claims, **characterised in that** devices for accident-related adjustment of the steering column (100) away from the driver are housed in the extruded profile or in the extruded profiles.

9. Steering column according to claim 8, **characterised in that** the devices for accident-related adjustment of the steering column (100) away from the driver contain load absorption devices which are housed in the extruded profile or in the extruded profiles.

10. Steering column according to claim 9, **characterised in that** the load absorption devices contain two load absorptions (11, 12) which can be activated or deactivated in dependence upon the seatbelt status and / or the size of the driver.

11. Steering column according to one of the claims 8 to 10 in association with claim 6 or 7, **characterised in that** the devices for accident-related adjustment of the steering column (100) away from the driver are housed in the extruded profiles of the guide plate (1) and of the outer housing (2).

12. Steering column according to one of the claims 8 to 11, **characterised in that** the devices for accident-related adjustment of the steering column (100) away from the driver contain pyrotechnical driving means which are housed in the extruded profile or in the extruded profiles.

13. Steering column according to one of the claims 8 to 12, **characterised in that** the devices for accident-related adjustment of the steering column (100) away from the driver contain pyrotechnical unlocking devices for the longitudinal adjustment of the steering column (100) and / or unlocking or locking devices for the load absorption devices.

14. Steering column according to one of the preceding claims, **characterised in that** devices for knee or leg protection of the driver are integrated into the extruded profile or into the extruded profiles.

15. Steering column according to claim 14, **characterised in that** the devices for knee or leg protection of the driver contain a knee / leg airbag (25) and or a knee impact plate which can be adjusted in particular towards the driver in the event of an accident and which is preferably mounted in a load-absorbing way.

16. Manufacturing method for a steering column, whereby devices for longitudinal adjustment and for height adjustment and an extruded profile are combined, **characterised in that** a further second extruded profile is arranged contained in the other first extruded profile in such a way that it is guided therein and that the devices for longitudinal adjustment and for height adjustment of the steering column (100) are housed in the two extruded profiles guided one inside the other.

17. Manufacturing method for a steering column according to claim 16, **characterised in that** the two extruded profiles are arranged in such a way that they are inserted one inside the other.

18. Manufacturing method for a steering column according to claim 16 or 17, **characterised in that** the two extruded profiles guided or inserted one inside the other on the one hand are an outer housing (2) of the steering column (100) and on the other hand a steering shaft housing (4) for a steering shaft (3) guided therein.

19. Manufacturing method for a steering column according to one of the claims 16 to 18, **characterised in that** the two extruded profiles guided or inserted one inside the other are arranged with the devices for longitudinal adjustment and for height adjustment of the steering column (100) in such a way that they are guided as a unit in a guide plate (1) which is likewise formed as an extruded profile.

20. Manufacturing method for a steering column according to claim 16 or 17, **characterised in that** the two extruded profiles guided or inserted one inside the other are on the one hand a guide plate (1) and on the other hand an outer housing (2) of the steering column guided therein, and **in that** the devices for longitudinal and / or for height adjustment of the steering column (100) are housed in the extruded profiles of the guide plate (1) and of the outer housing (2).

21. Manufacturing method for a steering column according to one of the claims 16 to 20, **characterised in that** devices for accident-related adjustment of the steering column (100) away from the driver are housed in the extruded profile or in the extruded profiles.

22. Manufacturing method for a steering column according to claim 21, **characterised in that** the devices for accident-related adjustment of the steering column (100) away from the driver contain load absorption devices which are housed in the extruded profile or in the extruded profiles.

23. Manufacturing method for a steering column according to claim 21 or 22 in association with claim 19 or 20, **characterised in that** the devices for accident-related adjustment of the steering column (100) away from the driver are housed in the extruded profiles of the guide plate (1) and of the outer housing (2).

24. Manufacturing method for a steering column according to one of the claims 21 to 23, **characterised in that** the devices for accident-related adjustment of the steering column (100) away from the driver contain pyrotechnical driving means which are housed in the extruded profile or in the extruded profiles.

25. Manufacturing method for a steering column according to one of the claims 21 to 24, **characterised in that** the devices for accident-related adjustment of the steering column (100) away from the driver contain pyrotechnical unlocking devices for the longitudinal adjustment of the steering column (100) and or unlocking or locking devices for the load absorption devices.

26. Manufacturing method for a steering column according to one of the claims 16 to 25, **characterised in that** devices for knee or leg protection of the driver are integrated into the extruded profile or into the extruded profiles.

27. Manufacturing method for a steering column according to claim 26, **characterised in that** the devices for knee or leg protection of the driver contain a knee / leg airbag (25) and / or a knee impact plate which can be adjusted in particular towards the driver in the event of an accident and which is preferably mounted so as to be load-absorbing.

## Revendications

1. Colonne de direction comprenant des dispositifs pour le réglage en longueur et pour le réglage en hauteur ainsi qu'un profilé extrudé,
**caractérisée en ce que**
il est prévu un second profilé extrudé,
l'un des profilés extrudés est guidé dans l'autre profilé extrudé, et
les dispositifs pour le réglage en longueur et pour le réglage en hauteur de la colonne de direction (100) sont logés dans les deux profilés extrudés guidés l'un dans l'autre.

2. Colonne de direction selon la revendication 1, **caractérisée en ce que** les deux profilés extrudés sont emboîtés l'un dans l'autre.

3. Colonne de direction selon la revendication 1 ou 2, **caractérisée en ce que** les deux profilés extrudés guidés ou emboîtés l'un dans l'autre sont d'une part un boîtier extérieur (2) de la colonne de direction (100) et d'autre part un boîtier d'arbre de direction (4) guidé dans celui-ci et destiné à un arbre de direction (3).

4. Colonne de direction selon la revendication 3, **caractérisée en ce que** les dispositifs pour le réglage en longueur et pour le réglage en hauteur de la colonne de direction (100) dans le boîtier extérieur (2) de la colonne de direction (100) présentent une fente de réglage (7) à laquelle sont associés une vis d'immobilisation (5) et un palier de pivotement (9) pour le réglage en hauteur de la colonne de direction (100).

5. Colonne de direction selon la revendication 3 ou 4, **caractérisée en ce que** les dispositifs pour le réglage en hauteur de la colonne de direction (100) comprennent un ressort de compensation (8) qui s'oppose au poids d'un arbre de direction (3).

6. Colonne de direction selon l'une des revendications précédentes, **caractérisée en ce que** les deux profilés extrudés guidés ou emboîtés l'un dans l'autre sont guidés, conjointement avec les dispositifs pour le réglage en longueur et pour le réglage en hauteur de la colonne de direction (100), comme une unité dans une plaque de guidage (1) qui est également réalisée sous forme de profilé extrudé.

7. Colonne de direction selon la revendication 1 ou 2, **caractérisée en ce que** les deux profilés extrudés guidés ou emboîtés l'un dans l'autre sont d'une part une plaque de guidage (1) et d'autre part un boîtier extérieur (2), guidé dans celle-ci, de la colonne de direction, et **en ce que** les dispositifs pour le réglage en longueur et/ou pour le réglage en hauteur de la colonne de direction (100) sont logés dans les profilés extrudés de la plaque de guidage (1) et du boîtier extérieur (2).

8. Colonne de direction selon l'une des revendications précédentes, **caractérisée en ce que** des dispositifs pour le déplacement en cas d'accident de la colonne de direction (100) en éloignement du conducteur sont logés dans le profilé extrudé ou dans les profilés extrudés.

9. Colonne de direction selon la revendication 8, **caractérisée en ce que** les dispositifs pour le déplacement en cas d'accident de la colonne de direction (100) en éloignement du conducteur comprennent des moyens d'absorption de charge qui sont logés dans le profilé extrudé ou dans les profilés extrudés.

10. Colonne de direction selon la revendication 9, **caractérisée en ce que** les moyens d'absorption de charge comprennent deux organes d'absorption de charge (11, 12) qui sont susceptibles d'être activés ou désactivés en fonction de l'état de bouclage de ceinture et/ou en fonction de la taille du conducteur.

11. Colonne de direction selon l'une des revendications 8 à 10 en dépendance de la revendication 6 ou 7, **caractérisée en ce que** les dispositifs pour le déplacement en cas d'accident de la colonne de direction (100) en éloignement du conducteur sont logés dans les profilés extrudés de la plaque de guidage (1) et du boîtier extérieur (2).

12. Colonne de direction selon l'une des revendications 8 à 11, **caractérisée en ce que** les dispositifs pour le déplacement en cas d'accident de la colonne de direction (100) en éloignement du conducteur comprennent des moyens d'entraînement pyrotechniques qui sont logés dans le profilé extrudé ou dans les profilés extrudés.

13. Colonne de direction selon l'une des revendications 8 à 12, **caractérisée en ce que** les dispositifs pour le déplacement en cas d'accident de la colonne de direction (100) en éloignement du conducteur comprennent des moyens de déverrouillage pyrotechniques pour le réglage en longueur de la colonne de direction (100) et/ou des moyens de déverrouillage ou de verrouillage pour les moyens d'absorption de charge.

14. Colonne de direction selon l'une des revendications précédentes, **caractérisée en ce que** dans le profilé extrudé ou dans les profilés extrudés sont intégrés des moyens de protection des genoux ou des jambes du conducteur.

15. Colonne de direction selon la revendication 14, **caractérisée en ce que** les moyens de protection des genoux ou des jambes du conducteur comprennent un airbag à genoux/jambes (25) et/ou une plaque d'impact de genoux qui est réglable en particulier vers le conducteur en cas d'accident et qui est montée de préférence de manière à absorber une charge.

16. Procédé de réalisation d'une colonne de direction, dans lequel on combine des dispositifs pour le réglage en longueur et pour le réglage en hauteur ainsi qu'un profilé extrudé, **caractérisé en ce que** l'on agence un autre second profilé extrudé contenu dans le premier profilé extrudé de manière à être guidé dans ce dernier, et **en ce que** les dispositifs pour le réglage en longueur et pour le réglage en hauteur de la colonne de direction (100) sont logés dans les deux profilés extrudés guidés l'un dans l'autre.

17. Procédé de réalisation d'une colonne de direction selon la revendication 16, **caractérisé en ce que** l'on agence les deux profilés extrudés de manière à être emboîtés l'un dans l'autre.

18. Procédé de réalisation d'une colonne de direction selon la revendication 16 ou 17, **caractérisé en ce que** les deux profilés extrudés guidés ou emboîtés l'un dans l'autre sont d'une part un boîtier extérieur (2) de la colonne de direction (100) et d'autre part un boîtier d'arbre de direction (4) guidé dans celui-ci et destiné à un arbre de direction (3).

19. Procédé de réalisation d'une colonne de direction selon l'une des revendications 16 à 18, **caractérisé en ce que** l'on agence les deux profilés extrudés guidés ou emboîtés l'un dans l'autre conjointement avec les dispositifs pour le réglage en longueur et pour le réglage en hauteur de la colonne de direction (100) de manière à être guidés comme une unité dans une plaque de guidage (1) qui est également réalisée sous forme de profilé extrudé.

20. Procédé de réalisation d'une colonne de direction selon la revendication 16 ou 17, **caractérisé en ce que** les deux profilés extrudés guidés ou emboîtés l'un dans l'autre sont d'une part une plaque de guidage (1) et d'autre part un boîtier extérieur (2), guidé dans celle-ci, de la colonne de direction, et **en ce que** les dispositifs pour le réglage en longueur et/ou pour le réglage en hauteur de la colonne de direction (100) sont logés dans les profilés extrudés de la plaque de guidage (1) et du boîtier extérieur (2).

21. Procédé de réalisation d'une colonne de direction selon l'une des revendications 16 à 20, **caractérisée en ce que** des dispositifs pour le déplacement en cas d'accident de la colonne de direction (100) en éloignement du conducteur sont logés dans le profilé extrudé ou dans les profilés extrudés.

22. Procédé de réalisation d'une colonne de direction selon la revendication 21, **caractérisé en ce que** les dispositifs pour le déplacement en cas d'accident de la colonne de direction (100) en éloignement du conducteur comprennent des moyens d'absorption de charge qui sont logés dans le profilé extrudé ou dans les profilés extrudés.

23. Procédé de réalisation d'une colonne de direction selon la revendication 21 ou 22 en dépendance de la revendication 19 ou 20, **caractérisé en ce que** les moyens pour le déplacement en cas d'accident de la colonne de direction (100) en éloignement du conducteur sont logés dans les profilés extrudés de la plaque de guidage (1) et du boîtier extérieur (2).

24. Procédé de réalisation d'une colonne de direction selon l'une des revendications 21 à 23, **caractérisé en ce que** les dispositifs pour le déplacement en cas d'accident de la colonne de direction (100) en éloignement du conducteur comprennent des moyens d'entraînement pyrotechniques qui sont logés dans le profilé extrudé ou dans les profilés extrudés.

25. Procédé de réalisation d'une colonne de direction selon l'une des revendications 21 à 24, **caractérisée en ce que** les dispositifs pour le déplacement en cas d'accident de la colonne de direction (100) en éloignement du conducteur comprennent des moyens de déverrouillage pyrotechniques pour le réglage en longueur de la colonne de direction (100) et/ou des moyens de déverrouillage ou de verrouillage pour les moyens d'absorption de charge.

26. Procédé de réalisation d'une colonne de direction selon l'une des revendications 16 à 25, **caractérisée en ce que** dans le profilé extrudé ou dans les profilés extrudés sont intégrés des moyens de protection des genoux ou des jambes du conducteur.

27. Procédé de réalisation d'une colonne de direction selon la revendication 26, **caractérisée en ce que** les moyens de protection des genoux ou des jambes du conducteur comprennent un airbag à genoux/jambes (25) et/ou une plaque d'impact de genoux qui est réglable en particulier vers le conducteur en cas d'accident et qui est montée de préférence de manière à absorber une charge.
